(19) Europäisches Patentamt
European Patent Office
Office européen des brevets

(11) **EP 3 407 513 B1**

(12) **EUROPEAN PATENT SPECIFICATION**

(45) Date of publication and mention
of the grant of the patent:
**10.07.2019  Bulletin 2019/28**

(51) Int Cl.:
**H04J 3/16** (2006.01)          **H02J 13/00** (2006.01)
**H02J 3/24** (2006.01)

(21) Application number: **18182469.9**

(22) Date of filing: **01.02.2012**

(54) **UPDATING DATA FROM A CONTROLLER OF A PRIMARY DEVICE OF A POWER SUBSTATION**

AKTUALISIEREN VON DATEN EINES STEUERGERÄTS EINER KRAFTWERKUNTERSTATION

MISE À JOUR DES DONNÉES D'UN SYSTÈME DE COMMANDE D'UN DISPOSITIF PRIMAIRE D'UN POSTE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.11.2018  Bulletin 2018/48**

(62) Document number(s) of the earlier application(s) in accordance with Art. 76 EPC:
**12704013.7 / 2 810 385**

(73) Proprietor: **ABB Schweiz AG**
**5400 Baden (CH)**

(72) Inventors:
 • **Deck, Bernhard**
   **79809 Weilheim (DE)**
 • **Küng, Thomas**
   **5415 Nussbaumen (CH)**

(74) Representative: **ABB Patent Attorneys**
**c/o ABB Schweiz AG**
**Intellectual Property CH-IP**
**Brown Boveri Strasse 6**
**5400 Baden (CH)**

(56) References cited:
 • **APOSTOLOV A P: "Requirements for automatic event analysis in substation automation systems", POWER ENGINEERING SOCIETY GENERAL MEETING, 2004. IEEE, IEEE, PISCATAWAY, NJ, USA, 6 June 2004 (2004-06-06), pages 1-6, XP010756815, DOI: 10.1109/PES.2004.1373003 ISBN: 978-0-7803-8465-1**
 • **WAI-LEUNG CHEUNG ET AL: "WAP access to SCADA-typed database system", WSEAS TRANSACTIONS ON COMPUTERS, WORLD SCIENTIFIC AND ENGINEERING ACADEMY AND SOCIETY, GR, vol. 2, no. 3, 1 July 2003 (2003-07-01), pages 560-565, XP009164402, ISSN: 1109-2750**
 • **LIU Y ET AL: "An IEC 61850 synchronised event logger for substation topology processing", AUSTRALIAN JOURNAL OF ELECTRICAL & ELECTRONICS ENGINEERING,, vol. 7, no. 3, 1 January 2010 (2010-01-01) , pages 225-233, XP009164400,**

**Description**

FIELD OF THE INVENTION

The invention relates to the field of monitoring of power substations. In particular, the invention relates to a method, a computer program and a computer readable medium for updating data of a controller of a primary device of a power substation. The invention relates also to a mobile device and a system comprising such a mobile device.

BACKGROUND OF THE INVENTION

Primary equipment or primary devices of a power substation, like relays, switches, breakers and transformers usually are connected to a controller (a secondary device) with a microprocessor that is adapted for controlling the respective primary device. For example, the controller of a protection relay may measure a current flowing through the relay and may open the relay, if a fault is detected.

For configuring the primary device or for diagnostic reasons, data may have to be read out of the controller or sent to the controller. For example, the controller may be connected via a station-bus to a central system like a SCADA system or a station computer. Data of the primary device or the controller may be transferred via the station-bus to the SCADA system or the station computer. In some cases, the data may be directly read out via a PC and an additional service interface of the controller. For reading data, a tool specific to the controller of the primary device may have to be started to interpret fault recorder data or to set configuration parameters.

If the controller of the primary device has a real time clock, the real time clock from time to time may have to be synchronized with a global clock.

Apostolov AP "Requirements for Automatic Event Analysis in Substation Automation Systems" analyzes the types of system events, available data sources and requirements for the development of hierarchical event analysis systems as well as time synchronization of the IEDs using several common methods.

Wai-Leung Cheung et al. "WAP Access to SCADA-Typed Database System" discusses the use of the Wireless Application Protocol WAP architecture to provide a wireless channel to access the SCADA database operating in the power process plant via Internet network protocol.

Liu Y et al "An IEC 61850 synchronised event logger for substation topology processing" discloses a topology processing technique that uses substation event information captured from legacy IEDs using a logging device, where the device implements IEEE 1588 standard to provide synchronised time-stamp values for each translated binary data within sub-microsecond accuracy.

DESCRIPTION OF THE INVENTION

It is an object of the invention to simplify the configuration and the diagnostics of primary devices.

This object is achieved by the subject-matter of the independent claims. Further exemplary embodiments are evident from the dependent claims and the following description.

An aspect of the invention relates to a method for updating data from a controller of a primary device of a power substation.

According to an embodiment of the invention, the method comprises the steps of: receiving diagnostic data from the controller via a local wireless communication network, the diagnostic data having timestamps with respect to an internal clock or a local clock of the controller; receiving a local clock time via the local wireless communication network from the controller; receiving an actual time from a time server; recalibrating the timestamps of the diagnostic data with respect to the local clock time. The local clock time can be updated according to the present invention.

In further embodiments, the local clock time may have been updated according to a method for updating the controller of the primary device of the power substation comprising the steps of: receiving the actual time from the time server via a cell phone communication network with a mobile device and sending, with the mobile device, the actual time via the local wireless communication network to the controller. In further embodiments, the method for updating the controller of the primary device of the power substation may further comprise the steps of: synchronizing the internal clock or the local clock of the controller with the actual time, storing the actual time in the controller as clock update time for later reference, and/or sending, with the mobile device, configuration parameters to the controller via the local communication network.

On the other hand, the mobile device may be used for receiving data from the controller. With the actual time that may be stored in the mobile device the timestamps of the data from the controller may be corrected in the case, the local clock of the controller is wrong.

In embodiments, the method for updating data from a controller of a primary device of a power substation further comprises the steps: calculating a time offset between the local clock time and the actual time; recalibrating the timestamps by changing a difference between a recalibrated timestamp time and a timestamp time proportional to a difference between the actual time and the local clock time. The recalibration may be performed by the mobile device. Alternatively, the method may further comprise sending the diagnostic data to a central system, wherein the recalibration may be performed by the central system.

A further aspect of the invention relates to a method for updating a controller of a primary device of a power substation.

According to an embodiment of the invention, the method comprises the steps of: receiving an actual time from a time server via a cell phone communication network with a mobile device; sending, with the mobile device, the actual time via a local wireless communication network to the controller.

The method of the further aspect may further comprise the steps of: synchronizing an internal clock of the controller with the actual time, storing the actual time in the controller as clock update time for later reference, and/or sending, with the mobile device, configuration parameters to the controller via the local communication network.

The local clock of the controller may be updated with the actual time stored in an mobile device, for example a smartphone. The actual time may be updated in the mobile device via the cell phone communication network and may be updated in the controller via a local wireless communication link, like WLAN or BlueTooth. This may provide a simple way of keeping the clock time of the controller actual, even in the case, the internal clock is too fast or too slow. Furthermore, the controller need not be connected to a wired communication network, which may simplify the installation of the controller.

A further aspect of the invention relates to a mobile device, for example a smartphone.

According to an embodiment of the invention, the mobile device comprises a first communication unit for communicating via a local wireless communication network and a second communication unit for communicating via a cell phone communication network. Furthermore, the mobile device is adapted for performing the method as described in the above and the following, in particular method for updating the controller of the primary device of the power substation. The first communication unit may comprise a WLAN or a BlueTooth interface. The second communication unit may comprise a GSM or a UMTS interface.

A further aspect of the invention relates to a system comprising such a mobile device and a controller for a primary device of a power substation having a communication unit for communicating via a local wireless network and the system may be configured to: receive diagnostic data from the controller via the local wireless communication network, the diagnostic data having timestamps with respect to a local clock of the controller; receive a local clock time via the local wireless communication network from the controller; receive an actual time from a time server; and recalibrate the timestamps of the diagnostic data with respect to the local clock time and the actual time. The system may be further configured to: send, with the mobile device, configuration parameters to the controller via the local communication network. The system may be further configured to: calculate a time offset between the local clock time and the actual time; recalibrate the timestamps by changing a difference between a recalibrated timestamp time and a timestamp time proportional to a difference between the actual time and the local clock time. The system may be further configured to: send the diagnostic data to a central system, wherein the recalibration is performed by the central system. Alternatively, the mobile device may be configured to perform the recalibration.

It has to be understood that features of the methods as described in the above and in the following may be features of the mobile device and the system as described in the above and in the following and vice versa.

Further aspects of the invention relate to a computer program for updating data of or from a controller of a primary device of a power substation, which, when being executed by a processor, is adapted to carry out the steps of the method as described in the above and in the following, and a computer-readable medium, in which such a computer program is stored. For example, the method as described in the above and in the following is performed by an "app" i.e. application stored in a smartphone and optionally further software stored in the controller and a central system for receiving and sending data from and to the smartphone.

A computer-readable medium may be a floppy disk, a hard disk, an USB (Universal Serial Bus) storage device, a RAM (Random Access Memory), a ROM (Read Only memory), A FLASH and an EPROM (Erasable Programmable Read Only Memory). A computer readable medium may also be a data communication network, e. g. the Internet, which allows downloading a program code.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig.1 schematically shows a power substation according to an embodiment of the invention.

Fig. 2 shows a flow diagram for a method for updating data in a controller according to an embodiment of the invention.

Fig.3 shows a diagram describing the recalibration of timestamps according to an embodiment of the invention.

Fig. 4 shows a flow diagram for a method for updating data from a controller according to an embodiment of the invention.

In principle, identical parts are provided with the same reference symbols in the figures.

DETAILED DESCRIPTION OF EXEMPLARY EMBODIMENTS

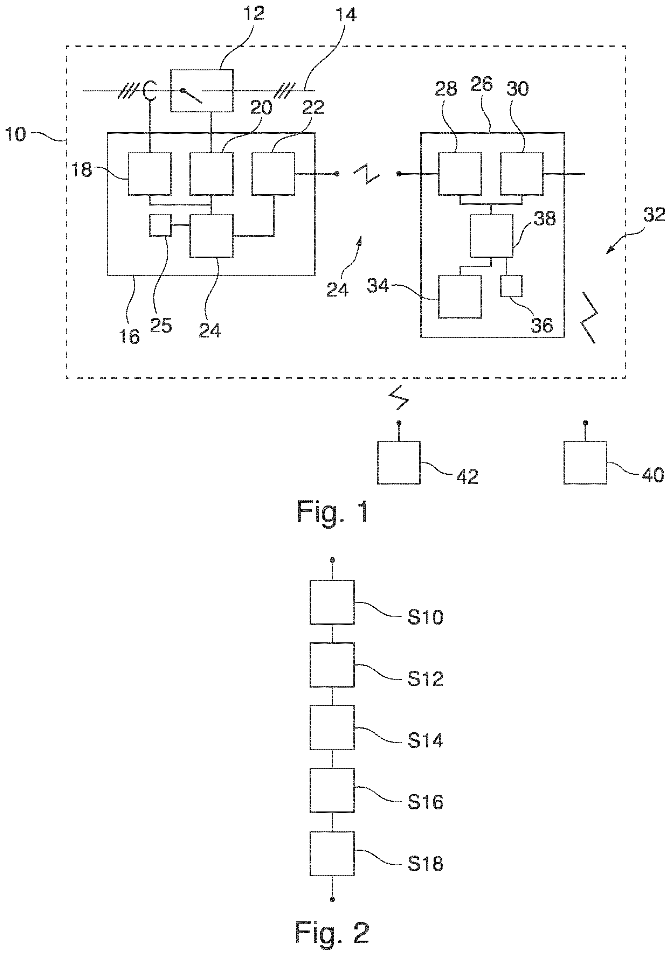

Fig.1 shows a power substation 10 with a high power primary device 12 coupled to high power lines 14 of the power substation 10.

The primary device 12, for example a protection relay, a high power switch, a breaker, an earth switch, a connector or a transformer, has a controller 16 for controlling the operation of the primary device 10. The controller 16 may be a device to be attached to or near the primary device 12 and may comprise a housing for accommodating all of its components.

The controller 16 may comprise a measurement unit 18 for measuring a current in the power lines 14, a control unit 20 for commanding the primary device 12 and a communication unit 22 for communication with external devices via a local wireless communication network 24, for example a radio communication network. The controller 16 may further comprise a CPU 24 with a processor and a storage for controlling the components 18, 20, 22 of the controller 18.

The controller 16 may further comprise a real time clock 25 that provides time values to the CPU 24.

The communication unit 22 may comprise a standard wireless communication interface (for example for BlueTooth, WLAN), which may replace a cable-bound interface. However, the communication unit 22 may also comprise additionally a cable-bound interface.

With the communication unit 22, an easy connection to a mobile device 26 may be established. The mobile device 26, which may be used and ported by a service technician, comprises a first communication unit 28 for communicating via the communication network 24 and second communication unit 30 for communicating via a cell phone communication network 32. The mobile device may further comprise a HMI (human machine interface) 34, for example with a display and a keyboard, a real time clock 36 and a CPU 38 with a processor and a storage for controlling the components 28, 30, 34, 36 of the mobile device 26. For example, the mobile device 26 may be a smartphone or a standard laptop.

The local real time clock 36 of the mobile device 26 may be synchronized with the time of a time server 40 via the cell phone communication network 32. Usually, a service provider of a cell phone communication network 32 also provides a service with the actual time that may be used for setting the time of the clock 36 to the actual time of the time server 40.

Via the communication units 22, 28, data from the controller 18 may be transmitted to mobile device 26 and data from the mobile device 26 may be transmitted to the controller 18 without the need for a physical cable-bound connection. The mobile device 26 may be a standard device and the communication may be performed by using an "app" (application program, computer program) which may have been downloaded in advance from an App server via internet or GSM, for example via the communication interface 28 or via the communication interface 30. The computer program may also be a function running on a web-browser.

The "app" or computer program may have controller specific functions like fault recorder data reading, parameter setting and writing or fault finding. Fault finding may comprise calculating a fault location or place of incident by combining and/or evaluating several data records of a same time interval.

The functions of the mobile device and the computer program may be started, controlled and supervised with the HMI 34 by a service technician.

In particular, the mobile device 26 may be used to synchronize the local real time clock 25 of the controller 16.

According to an embodiment of the invention, a mobile device 26, comprises a first communication unit 28 for communicating via a local wireless communication network 24 and a second communication unit 30 for communicating via a cell phone communication network 32. The mobile device 26 is adapted for exchanging data and synchronizing the time of the controller with its own time as described in the above and in the following.

According to an embodiment of the invention, the mobile device 26 is part of a system, which comprises further a controller 16 for a primary device 12 of a power substation 10 that has a communication unit 22 for communicating via a local wireless network 24.

Fig. 2 shows a flow diagram for a method for updating data in the controller 16 and in particular for setting or updating the clock 25.

In step S10, the actual time from the time server 40 is received in the mobile device 26 via the communication unit 30 and the clock 36 is set to the actual time by the CPU 38.

According to an embodiment of the invention, the method comprises the step of: receiving an actual time from a time server 40 via a cell phone communication network 32 with a mobile device 26.

In step S12, which may be executed after a respective command of the service technician via the HMI 34, when the mobile device is in a communication range with respect to the controller 16, the actual time is sent to the controller 16.

It has to be understood that step S10 may be automatically performed in regular time intervals and that steps S12 and the following steps may be performed only after a command from a service technician. However, also the synchronization of the clock 25 with the clock 36 and further functions may be triggered automatically, for example by the event, that the mobile device 26 enters the communication range to the controller 16.

For sending the actual time to the controller 16, the communication units 28, 32 establish a communication link and the CPU 24 receives in step S14 the actual time and sets the internal clock 25 to the received actual time.

According to an embodiment of the invention, the method comprises the step of sending, with the mobile device 26, the actual time via a local wireless communication network 24 to the controller 16.

According to an embodiment of the invention, the method comprises the step of synchronizing an internal clock 25 of the controller 16 with the actual time.

Even in the case, the controller 16 is not connected via a substation bus or other wired communication line to a central system, an internal clock 25 or real time click 25 may be synchronized with a time from a mobile device 26 and therefore with a time from a time server 40 that provides a global actual time.

By time synchronizing the controller 16 of a primary device 12 to a time server 40, it may be easier to compare for example fault records on a time basis with fault records recorded by another controller of a further primary device and pertaining to the same fault (incidence). By using a smartphone together with above described application it may be possible to update the real time clock 25 of the controller 25 with the actual time. The smartphone may have the actual time from the timeserver 40, which may be located in a base station of a cell phone or internal GPS network. For example, the smartphone time and date may be continuously synchronized in every country.

In step S16, further configuration parameter may be sent to the controller 16. The wireless communication link may also be used for configuring the controller 16 with the mobile device 26 or for sending commands to the controller 16.

For example, the service technician may use a standard smartphone 26 for configuring the controller 16. Only an application with corresponding functions may have to be installed in the smartphone.

According to an embodiment of the invention, the method comprises the step of sending, with the mobile device 26, configuration parameters to the controller 26 via the local communication network 24.

In step S18, the received actual time may be stored in the controller 16 by the CPU 24 for further reference. As will be explained in the following this time value may be used for recalibrating timestamped data from the controller 16, when the clock 25 is to slow or to fast with respect to the correct time of the time server 40. It has to be noted that all times and time values mentioned in the present application may refer to date and time values.

According to an embodiment of the invention, the method comprises the step of storing the received actual time in the controller 16 as clock update time $t_{up}$ for later reference.

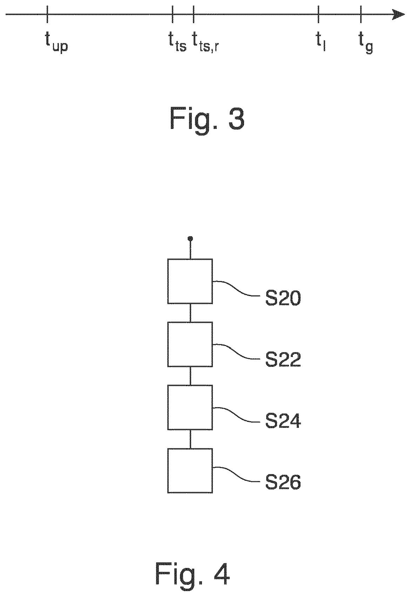

The clock update time $t_{up}$ is shown in Fig. 3, which shows further time values that are used in the methods as explained with respect to Fig.2 and Fig. 4.

In particular, when the clock 25 of the controller 16 has been synchronized with the clock 36 of the mobile device 26, the controller 16 has set the update time $t_{up}$ to the received actual time. After a while, for example a fault was detected by the controller 16 and a respective fault data record was generated and stored in the controller 16. This data record was timestamped with the local clock time of the fault event $t_{ts}$. Later, when the fault data record is downloaded from the controller 16 with the mobile device 26, the local clock time $t_l$ of the clock 25 differs from the global actual time $t_g$ of the clock 36 of the mobile device 26 because the local clock 25 is a bit slower or a bit faster than the correct actual time. From the timestamp time $t_{ts}$, a recalibrated timestamp time $t_{ts,r}$ may then be calculated.

Fig. 4 shows a method for updating data from the controller 16, in which timestamped data is recalibrated.

In step S20, a communication link 24 is established between the communication units 22, 28 and diagnostic data is sent from the controller 16 to the mobile device 26. For example, this may be triggered by a command of a service technician or automatically as explained above.

According to an embodiment of the invention, the method comprises the step of receiving diagnostic data from the controller 16 via the local wireless communication network 24. The diagnostic data may have timestamps $t_{ts}$ with respect to a local clock 25 of the controller 16.

Diagnostic data may comprise fault data, measurement data from a sensor attached to the primary device 12, or in general other data related with the controller 16 and/or the primary device 12.

In step S22, the controller 16 also sends its local clock time $t_l$ to the mobile device 16.

According to an embodiment of the invention, the method comprises the step of receiving a local clock time $t_l$ via the local wireless communication network 24 from the controller 16.

As already said, the actual time $t_g$ of the clock of the mobile device 36 may have been received from a time server 40.

In optional step S24, the diagnostic data, the local time and the actual time may be sent to a central system 24, for example a central monitoring system of the substation 10 or a SCADA system that may be remote from the substation 10. The diagnostic data and the time values $t_l$, $t_g$, $t_{up}$ may be sent via a communication link 24, i.e. with the local communication unit 28 (after the service technician and the mobile device have entered the communication range of the central system 42) or via the communication network 32.

In step S26, the timestamps of the diagnostic data are then recalibrated either in the mobile device 26 or in the central system 42.

According to an embodiment of the invention, the method comprises the step of recalibrating the timestamps $t_{ts}$ of the diagnostic data with respect to the local clock time $t_l$ and the actual time $t_g$.

According to an embodiment of the invention, the recalibrations is performed by the mobile device 26.

According to an embodiment of the invention, the diagnostic data to is sent to a central system 42, wherein the recalibration is performed by the central system 42.

Under the assumption that the local clock 25 has a constant speed which slightly differs from the speed of the actual time, the recalibrated timestamps may be calcualted in the following way:

$$t_{ts,r} = t_{up} + (t_{ts} - t_{up}) * (t_{gc} - t_{up}) / (t_{lc} - t_{up})$$

According to an embodiment of the invention, the method comprises the steps of calculating an time offset between the local clock time $t_l$ and the actual time $t_g$ and recalibrating the timestamps $t_{ts}$ by changing a difference between a recalibrated timestamp time $t_{ts,r}$ and a timestamp time $t_{ts}$ proportional to a difference between the actual time $t_g$ and the local clock time $t_l$.

In the end, the local clock time of the clock 25 may be synchronized again with the actual time of the clock 36 as explained with respect to Fig. 2.

With this method, it may be possible to calculate the actual inaccuracy of the real time clock 25. The clock 25 may be matched to the clock 36 by reading the local time and by comparing it with the actual time of the clock 36. Transmission delays may be neglected. By knowing the inaccuracy, and at the time of the upload of diagnostic data this may be a simple offset, the timestamps of for example uploaded fault records and events may be recalibrated to this offset. Through this, it may be possible to compare fault records from other controllers and primary devices, without a (permanently connected) time server 40.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method for updating data from a controller (16) of a primary device (12) of a power substation (10), the method being **characterised by** :

   receiving diagnostic data from the controller (16) via a local wireless communication network (24), the diagnostic data having timestamps ($t_{ts}$) with respect to a local clock (25) of the controller (16);
   receiving a local clock time (ti) via the local wireless communication network (24) from the controller (16);
   receiving an actual time ($t_g$) from a time server (40);
   recalibrating the timestamps ($t_{ts}$) of the diagnostic data with respect to the local clock time ($t_l$) and the actual time ($t_g$).

2. The method of claim 1, wherein the local clock time (ti) has been updated according to a method for updating the controller (16) of the primary device (12) of the power substation (10) comprising:

   receiving the actual time ($t_g$) from the time server (40) via a cell phone communication network (32) with a mobile device (26);
   sending, with the mobile device (26), the actual time ($t_g$) via the local wireless communication network (24) to the controller (16).

3. The method of claim 2, wherein the method for updating the controller (16) of the primary device (12) of the power substation (10) further comprises:
   synchronizing the local clock (25) of the controller (16) with the actual time ($t_g$).

4. The method of claim 2 or 3, wherein the method for updating the controller (16) of the primary device (12) of the power substation (10) further comprises:
   storing the actual time ($t_g$) in the controller (16) as clock update time ($t_{up}$) for later reference.

5. The method of one of claims 2 to 4, wherein the method for updating the controller (16) of the primary device (12) of the power substation (10) further comprises:
   sending, with the mobile device (26), configuration parameters to the controller (16) via the local communication network (24).

6. The method of one of claims 1 to 5, further comprising the steps:

   calculating a time offset between the local clock time ($t_l$) and the actual time ($t_g$);
   recalibrating the timestamps ($t_{ts}$) by changing a difference between a recalibrated timestamp time ($t_{ts,r}$) and a timestamp time ($t_{ts}$) proportional to a difference between the actual time ($t_g$) and the local clock time ($t_l$).

7. The method of one of claims 2 to 6, wherein the recalibration is performed by the mobile device (26).

8. The method of one of claims 1 to 6, further comprising the step of:
sending the diagnostic data to a central system (42), wherein the recalibration is performed by the central system (42).

9. A system, comprising:

a controller (16) for a primary device (12) of a power substation (10);
wherein the controller (16) has a communication unit (22) for communicating via a local wireless network (24) and the system is **characterised in that** it is configured to:
receive diagnostic data from the controller (16) via the local wireless communication network (24), the diagnostic data having timestamps ($t_{ts}$) with respect to a local clock (25) of the controller (16);
receive a local clock time ($t_l$) via the local wireless communication network (24) from the controller (16);
receive an actual time ($t_g$) from a time server (40);
recalibrate the timestamps ($t_{ts}$) of the diagnostic data with respect to the local clock time (tl) and the actual time ($t_g$).

10. The system of claim 9, further configured to:

calculate a time offset between the local clock time ($t_l$) and the actual time ($t_g$);
recalibrate the timestamps ($t_{ts}$) by changing a difference between a recalibrated timestamp time ($t_{ts,r}$) and a timestamp time ($t_{ts}$) proportional to a difference between the actual time ($t_g$) and the local clock time ($t_l$).

11. The system of claim 9 or 10, further comprising a mobile device (26) and wherein the mobile device (26) is configured to perform the recalibration.

12. The system of claim 9 or 10, further comprising a central system (42) and configured to: send the diagnostic data to a central system (42), wherein the recalibration is performed by the central system (42).

13. A computer program for updating data from a controller (16) of a primary device (12) of a power substation (10), which, when being executed by a processor, is adapted to carry out the steps of the method of one of claims 1 to 8.

14. A computer-readable medium, in which a computer program according to claim 13 is stored.

**Patentansprüche**

1. Ein Verfahren zum Aktualisieren von Daten von einer Steuereinrichtung (16) einer Primärvorrichtung (12) eines Umspannwerks (10), wobei das Verfahren durch Folgendes gekennzeichnet ist:

Empfangen von Diagnosedaten von der Steuereinrichtung (16) über ein lokales Drahtloskommunikationsnetzwerk (24), wobei die Diagnosedaten Zeitstempel ($t_{ts}$) mit Bezug auf eine lokale Uhr (25) der Steuereinrichtung (16) aufweisen;
Empfangen einer lokalen Uhrzeit ($t_l$) über das lokale Drahtloskommunikationsnetzwerk (24) von der Steuereinrichtung (16);
Empfangen einer tatsächlichen Zeit ($t_g$) von einem Zeitserver (40);
Rekalibrieren der Zeitstempel ($t_{ts}$) der Diagnosedaten mit Bezug auf die lokale Uhrzeit ($t_l$) und die tatsächliche Zeit ($t_g$).

2. Das Verfahren nach Anspruch 1, wobei die lokale Uhrzeit ($t_l$) gemäß einem Folgendes umfassendes Verfahren zum Aktualisieren der Steuereinrichtung (16) der Primärvorrichtung (12) des Umspannwerks (10) aktualisiert wurde:

Empfangen der tatsächlichen Zeit ($t_g$) von dem Zeitserver (40) über ein Mobiltelefonkommunikationsnetzwerk (32) mit einem Mobilgerät (26);
Senden, mit dem Mobilgerät (26) der tatsächlichen Zeit ($t_g$) über das Drahtloskommunikationsnetzwerk (24) an die Steuereinrichtung (16).

3. Das Verfahren nach Anspruch 2, wobei das Verfahren zum Aktualisieren der Steuereinrichtung (16) der Primärvorrichtung (12) des Umspannwerks (10) ferner umfasst:
Synchronisieren der lokalen Uhr (25) der Steuereinrichtung (16) mit der tatsächlichen Zeit ($t_g$).

4. Das Verfahren nach Anspruch 2 oder 3, wobei das Verfahren zum Aktualisieren der Steuereinrichtung (16) der Primärvorrichtung (12) des Umspannwerks (10) ferner umfasst:
Speichern der tatsächlichen Zeit ($t_g$) in der Steuereinrichtung (16) als Uhrenaktualisierungszeit ($T_{up}$) für spätere Bezugnahme.

5. Das Verfahren nach einem der Ansprüche 2 bis 4, wobei das Verfahren zum Aktualisieren der Steuereinrichtung (16) der Primärvorrichtung (12) des Umspannwerks (10) ferner umfasst:
Senden mit dem Mobilgerät (26) von Konfigurationsparametern an die Steuereinrichtung (16) über das lokale Kommunikationsnetzwerk (24).

6. Das Verfahren nach einem der Ansprüche 1 bis 5, ferner umfassend die folgenden Schritte:

Berechnen eines Zeitversatzes zwischen der lokalen Uhrzeit ($t_l$) und der tatsächlichen Zeit ($t_g$); Rekalibrieren der Zeitstempel ($t_{ts}$) durch Ändern einer Differenz zwischen einem rekalibrierten Zeitstempel ($t_{ts,r}$) und einer Zeitstempelzeit ($t_{ts}$) proportional zu einer Differenz zwischen der tatsächlichen Zeit ($t_g$) und der lokalen Uhrzeit ($t_l$).

7. Das Verfahren nach einem der Ansprüche 2 bis 6, wobei die Rekalibrierung durch das Mobilgerät (26) durchgeführt wird.

8. Das Verfahren nach einem der Ansprüche 1 bis 6, ferner umfassend den folgenden Schritt:
Senden der Diagnosedaten an ein Zentralsystem (42), wobei die Rekalibrierung durch das Zentralsystem (42) durchgeführt wird.

9. Ein System, umfassend:

eine Steuereinrichtung (16) für eine Primärvorrichtung (12) eines Umspannwerks (10); wobei die Steuereinrichtung (16) eine Kommunikationseinheit (22) zum Kommunizieren über ein lokales Drahtlosnetzwerk (24) aufweist und das System **dadurch gekennzeichnet ist, dass** es ausgelegt ist zum:

Empfangen von Diagnosedaten von der Steuereinrichtung (16) über das lokale Drahtloskommunikationsnetzwerk (24), wobei die Diagnosedaten Zeitstempel ($t_{ts}$) mit Bezug auf eine lokale Uhr (25) der Steuereinrichtung (16) aufweisen; Empfangen einer lokalen Uhrzeit ($t_l$) über das lokale Drahtloskommunikationsnetzwerk (24) von der Steuereinrichtung (16); Empfangen einer tatsächlichen Zeit ($t_g$) von einem Zeitserver (40); Rekalibrieren der Zeitstempel ($t_{ts}$) der Diagnosedaten mit Bezug auf die lokale Uhrzeit ($t_l$) und die tatsächliche Zeit ($t_g$).

10. Das System nach Anspruch 9, ferner ausgelegt zum:

Berechnen eines Zeitversatzes zwischen der lokalen Uhrzeit ($t_l$) und der tatsächlichen Zeit ($t_g$); Rekalibrieren der Zeitstempel ($t_{ts}$) durch Ändern einer Differenz zwischen einem rekalibrierten Zeitstempel ($t_{ts,r}$) und einer Zeitstempelzeit ($t_{ts}$) proportional zu einer Differenz zwischen der tatsächlichen Zeit ($t_g$) und der lokalen Uhrzeit ($t_l$).

11. Das System nach Anspruch 9 oder 10, ferner umfassend ein Mobilgerät (26) und wobei das Mobilgerät (26) ausgelegt ist zum Durchführen der Rekalibrierung.

12. Das System nach Anspruch 9 oder 10, ferner umfassend ein Zentralsystem (42) und ausgelegt zum:
Senden der Diagnosedaten an ein Zentralsystem (42), wobei die Rekalibrierung durch das Zentralsystem (42) durchgeführt wird.

13. Ein Computerprogramm zum Aktualisieren von Daten von einer Steuereinrichtung (16) einer Primärvorrichtung (12) eines Umspannwerks (10), welches, wenn es durch einen Prozessor ausgeführt wird, zum Ausführen der Schritte des Verfahren nach einem Ansprüche 1 bis 8 eingerichtet ist.

14. Ein Computerlesbares Medium, in welchem ein Computerprogramm nach Anspruch 13 gespeichert ist.

**Revendications**

1. Un procédé de mise à jour de données provenant d'un contrôleur (16) d'un dispositif principal (12) d'un poste électrique (10), le procédé étant **caractérisé par** :

recevoir des données de diagnostic à partir du contrôleur (16) via un réseau de communication local sans fil (24), les données de diagnostic ayant des horodatages ($t_{ts}$) par rapport à une horloge locale (25) du contrôleur (16) ; recevoir un temps d'horloge locale ($t_l$) via le réseau de communication local sans fil (24) à partir du contrôleur (16); recevoir un temps réel ($t_g$) à partir d'un serveur temporel (40); réétalonner les horodatages ($t_{ts}$) des données de diagnostic par rapport au temps d'horloge locale ($t_l$) et au temps réel ($t_g$) .

2. Le procédé selon la revendication 1, dans lequel le temps d'horloge locale ($t_l$) a été mis à jour conformément à un procédé de mise à jour du contrôleur (16) du dispositif principal (12) du poste électrique (10), le procédé de mise à jour du contrôleur (16) comprenant de:

recevoir le temps réel ($t_g$) à partir du serveur temporel (40) via un réseau de communication de téléphonie cellulaire (32) avec un dispositif mobile (26) ; envoyer, avec le dispositif mobile (26), le temps réel ($t_g$) via le réseau de communication sans fil local (24) au contrôleur (16).

**3.** Le procédé selon la revendication 2, dans lequel le procédé de mise à jour du contrôleur (16) du dispositif principal (12) du poste électrique (10) comprend en outre de :
synchroniser l'horloge locale (25) du contrôleur (16) avec le temps réel ($t_g$).

**4.** Le procédé selon la revendication 2 ou 3, dans lequel le procédé de mise à jour du contrôleur (16) du dispositif principal (12) du poste électrique (10) comprend en outre de :
stocker le temps réel ($t_g$) dans le contrôleur (16) en tant que temps de mise à jour d'horloge ($t_{up}$) pour référence ultérieure.

**5.** Le procédé selon l'une des revendications 2 à 4, dans lequel le procédé de mise à jour du contrôleur (16) du dispositif principal (12) du poste électrique (10) comprend en outre de :
envoyer, avec le dispositif mobile (26), des paramètres de configuration au contrôleur (16) via le réseau de communication local (24).

**6.** Le procédé selon l'une des revendications 1 à 5, comprenant en outre les étapes consistant à :

calculer un décalage temporel entre le temps d'horloge locale ($t_l$) et le temps réel ($t_g$) ;
réétalonner les horodatages ($t_{ts}$) en modifiant une différence entre un temps d'horodatage réétalonné ($t_{ts,r}$) et un temps d'horodatage ($t_{ts}$) proportionnel à une différence entre le temps réel ($t_g$) et le temps d'horloge locale ($t_l$).

**7.** Le procédé selon l'une des revendications 2 à 6, dans lequel le réétalonnage est effectué par le dispositif mobile (26).

**8.** Le procédé selon l'une des revendications 1 à 6, comprenant en outre l'étape consistant à :
envoyer les données de diagnostic à un système central (42), dans lequel le réétalonnage est effectué par le système central (42).

**9.** Un système, comprenant :

un contrôleur (16) pour un dispositif principal (12) d'un poste électrique (10);
dans lequel le contrôleur (16) possède une unité de communication (22) pour communiquer via un réseau local sans fil (24), et le système est **caractérisé en ce qu'**il est configuré pour :

recevoir des données de diagnostic à partir du contrôleur (16) via le réseau de communication local sans fil (24), les données de diagnostic comportant des horodatages ($t_{ts}$) par rapport à une horloge locale (25) du contrôleur (16);
recevoir un temps d'horloge locale ($t_l$) via le réseau de communication local sans fil (24) à partir du contrôleur (16);
recevoir un temps réel ($t_g$) à partir d'un serveur temporel (40);
réétalonner les horodatages ($t_{ts}$) des données de diagnostic par rapport au temps d'horloge locale ($t_l$) et au temps réel ($t_g$).

**10.** Le système selon la revendication 9, configuré en outre pour :

calculer un décalage temporel entre le temps d'horloge locale ($t_l$) et le temps réel ($t_g$) ;
réétalonner les horodatages ($t_{ts}$) en modifiant une différence entre un temps d'horodatage réétalonné ($t_{ts,r}$) et un temps d'horodatage ($t_{ts}$) proportionnel à une différence entre le temps réel ($t_g$) et le temps d'horloge locale ($t_l$).

**11.** Le système selon la revendication 9 ou 10, comprenant en outre un dispositif mobile (26), et dans lequel le dispositif mobile (26) est configuré pour effectuer le réétalonnage.

**12.** Le système selon la revendication 9 ou 10, comprenant en outre un système central (42) et configuré pour :
envoyer les données de diagnostic à un système central (42), dans lequel le réétalonnage est effectué par le système central (42).

**13.** Un programme informatique pour mettre à jour des données provenant d'un contrôleur (16) d'un dispositif principal (12) d'un poste électrique (10), qui, lorsqu'il est exécuté par un processeur, est conçu pour exécuter les étapes du procédé de l'une des revendications 1 à 8.

**14.** Un support lisible par ordinateur, sur lequel est stocké un programme d'ordinateur selon la revendication 13.

Fig. 1

Fig. 2

$t_{up}$  $t_{ts}$ $t_{ts,r}$  $t_l$  $t_g$

# Fig. 3

S20

S22

S24

S26

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WAI-LEUNG CHEUNG et al.** *WAP Access to SCADA-Typed Database System*

- **LIU Y et al.** *An IEC 61850 synchronised event logger for substation topology processing*